# EUROPEAN PATENT SPECIFICATION

(11) **EP 3 151 523 B1**
(45) Date of publication and mention of the grant of the patent: **06.05.2020**
(21) Application number: 16191224.1
(22) Date of filing: 28.09.2016
(51) Int. Cl.: H04M 1/04, G06F 1/16, G06K 7/10

(54) **MODULE FOR HOUSING PORTABLE TERMINALS AND MODULAR ASSEMBLY COMPRISING SAID MODULE**
MODUL, UM TRAGBARE ENDGERÄTE ZU UNTERBRINGEN UND MODULARE ANORDNUNG MIT DIESEM MODUL
MODULE POUR L'ACCUEIL DE TERMINAUX PORTABLES ET ENSEMBLE MODULAIRE COMPRENANT LEDIT MODULE

(30) Priority: 30.09.2015 IT UB20154028
(43) Date of publication of application: 05.04.2017
(73) Proprietor: Datalogic IP Tech S.r.l., 40012 Calderara di Reno (BO) (IT)
(72) Inventor: MINAFO', Giovanni, I-44124 Cento (FE) (IT); PAOLIZZI, Simone, I-47921 Rimini (IT)
(74) Representative: Porta & Consulenti Associati S.p.A.

(56) References cited:
- US-A- 5 195 183
- US-A1- 2007 002 533

## Description

The present invention relates to a module for housing portable terminals.

The invention further relates to a modular assembly comprising the aforesaid module.

Within the remainder of the present description and in the subsequent claims, the term "portable terminals" is intended to refer to electronic and/or optoelectronic devices of any kind that are intended to be grasped by a user who moves from one area to another area of any environment. Reference is made, for example, to optical scanners, handheld computers, laptops, PDAs, tablet computers, cell phones, portable measuring instruments and more generally portable devices that are capable of connecting themselves to wireless networks by means of a suitable RF reception/transmission device, etc.

The use of portable terminals for the acquisition of product data within a shopping center that operates a system of self-scanning shopping is known.

The term "self-scanning shopping system" signifies a self-service shopping system wherein the customer takes products to be purchased directly from the various shelves of the shopping center and reads the respective optical codes (as products are taken off the shelves and before placing them in the shopping cart or basket) using a portable terminal previously taken from a suitable distributor specifically provided within the shopping center itself. Once the shopping is complete, the customer replaces the terminal at an appropriate payment station or directly within the dispenser from which it had been taken, in which case the payment is made at such a distributor. Alternatively the customer moves directly to the shopping center check-out with the terminal; said terminal is given to a shopping center operator who, by means of a suitable device, downloads the data stored within the terminal, such as to calculate the total amount to be paid.

As is known, self-scanning shopping systems allow the speed of the control operations carried out by the check-out operators at shopping centers to be significantly increased, relieving them from the burden of performing the reading of the optical codes upon each individual product; such an operation often leads to the forming of long queues in front of the check-out, especially at peak times, such as for example at closing time.

Portable terminals are also used by the staff of shopping centers for inventory management and periodic re-stocking of the shelves.

For this purpose portable terminals typically comprise at least a display and a keyboard.

Portable terminals of different shapes and sizes are known.

In particular, portable terminals without a handle and portable terminals provided with a handle are known.

Handle free portable terminals typically have a substantially parallelepiped shaped body or similar; the user grasps the terminal at a lower portion of the body of the terminal. Such terminals are hereinafter referred to as "Handheld terminal".

Conversely portable terminals equipped with a handle typically have, in addition to a body with a substantially parallelepiped or similar shape, a handgrip (or handle) associated with the aforesaid body such as to comprehensively define a "gun" shape; the user grasps the terminal by the aforesaid handgrip. Such terminals are hereinafter referred to as "Gun terminal".

The Applicant noted that shopping center customers typically prefer to use Handheld terminals, whilst the staff of shopping centers prefer to use Gun terminals. The Applicant has observed however that opposite cases also exist, i.e., cases wherein shopping center customers typically prefer to use Gun terminals, whilst the staff of shopping centers prefer to use Handheld terminals.

To satisfy the preferences of both shopping center customers and operators, some manufacturers of portable terminals, including the Applicant, market, for the same model of terminal, both a Handheld and a Gun version.

According to the Applicant, within shopping centers, it is highly desirable to provide distributors of portable terminals that are suitable for housing both Handheld and Gun terminals.

The Applicant also considers that, in the case of Handheld terminals, it is appropriate that such terminals, when housed within their housing receptacles, specifically provided within the aforesaid distributors, be oriented such that the displays of such terminals are all clearly visible to customers; indeed, such displays are very often used by the owners of shopping centers in order to convey advertising images or videos to customers. It is also appropriate that the mutual arrangement of the various housing receptacles is such as to allow for the greatest possible number of housing receptacles within the space specifically dedicated to the collection of portable terminals.

On the other hand, according to the Applicant it is appropriate that in the event that the aforesaid distributors house Gun terminals, such terminals should be oriented in such a way that their handles are all easily accessible and graspable by customers. Also in this case, it is necessary to ensure the greatest possible number of housing receptacles within the space specifically dedicated to the collection of portable terminals.

US 5195 183 describes a docking unit provided with a receptacle for housing a hand-held type portable terminal. The receptacle is mountable, by means of a bracket, on a support wall and on a horizontal surface. Such a bracket comprises a vertical plate and a horizontal base. The vertical plate comprises both openings for mounting on a vertical support wall and openings for housing the connectors of a conventional telephone terminal wall mounting plate. Conversely, only holes for fixing to a horizontal plane are provided on the base.

US 7480138 describes a docking station comprising a plurality of receptacles that are suitable for housing portable terminals of different shape. The aforementioned receptacles all have standard shapes and sizes and, in order to house different-shaped terminals, in one or more of such receptacles is housed a removable adapter insert having an inner surface of a shape that is conjugated with the outer surface of the terminal to be housed within that receptacle.

The Applicant has observed that the solution described in US 7480138, in addition to requiring the provision of specially shaped adapter inserts (resulting in increased production and assembly costs), does not allow for housing Handheld terminals and Gun terminals according to the desired orientation discussed above.

The Applicant therefore highlighted the problem of finding an appropriate solution to allow for housing both Handheld terminals and Gun terminals according to an optimal orientation for each of these two types of terminals, without the need to provide adapter inserts.

The present invention relates, in a first aspect thereof, to a module for housing portable terminals, comprising a main body extended along a longitudinal direction and provided with at least one housing receptacle for a portable terminal, said main body comprising:
- a first mounting wall of said main body adapted to be mounted on a support wall;
- a second mounting wall of said main body adapted to be mounted on said support wall, said second mounting wall being inclined with respect to said first mounting wall at a fixed angle;
wherein said main body is mountable on said support wall in at least two different mounting positions, a first mounting position being defined when said main body is oriented in order to be mounted on said support wall by means of said first mounting wall and a second mounting position being defined when said main body is oriented in order to be mounted on said support wall by means of said second mounting wall;
wherein in said first mounting position said at least one housing receptacle extends along a first insertion/extraction direction of said portable terminal toward/from said at least one housing receptacle and said second mounting position said at least one housing receptacle extends along a second insertion/extraction direction of said portable terminal toward/from said at least one housing receptacle, said second insertion/extraction direction being different from said first insertion/extraction direction.

Advantageously, the module of the present invention can be oriented and mounted (preferably on a substantially vertical mounting wall) in a position that is particularly suitable for housing Handheld terminals and in another position that is particularly suitable for housing Gun terminals. In this way, where the use of Handheld terminals is envisaged, the module is mounted according to a first orientation, whereas, where the use of Gun terminals is envisaged, the same module is mounted according to a different orientation. Each housing receptacle of the module is in fact suitable for housing both Handheld terminals and Gun terminals, without the need to provide accessories of any kind (such as, for example, the adapter inserts suggested by US 7480138). Before mounting the module, the operator is simply required to suitably orient it according to the type of terminal to be used.

Preferably, said main body comprises at least two (more preferably three) housing receptacles for respective portable optical terminals, said housing receptacles being placed side by side along said longitudinal direction.

Further embodiments are envisaged with more than three side-by-side housing receptacles.

Said at least one second mounting wall can or cannot have the same shape and surface extension as said first mounting wall.

Said main body can or cannot have, in cross-section, a symmetrical shape with respect to a bisector of said prefixed angle.

Preferably, said fixed angle is greater than, or equal to, 90°, more preferably comprised between approximately 90° and approximately 135°, including extremities.

The Applicant has found that in this way a particular optimal orientation of the housing receptacle is obtained both in the case wherein the use of Handheld terminals is envisaged (in this case the module is mounted on the support wall by means of one of the aforesaid first and second mounting walls) and the case wherein the use of Gun terminals is envisaged (in which case the module is mounted on the support wall by means of the other of said first and second mounting walls).

Preferably, said first insertion/extraction direction is inclined, with respect to said first mounting wall, by a first angle that is less than, or equal to, 45°, more preferably comprised between approximately 5° and approximately 40°, including extremities.

According to the Applicant, such an orientation is optimal for housing Handheld terminals. In fact such an orientation allows the visibility of the respective displays and the number of modules that can be used within a predefined space to be maximized.

Preferably, said at least one second insertion/extraction direction is inclined, with respect to said at least one second mounting wall, by a second angle that is greater than, or equal to, 45°, more preferably comprised between approximately 45° and approximately 85°, including extremities.

According to the Applicant, such an orientation is optimal for housing Gun terminals. In fact such an orientation allows for maximum ease of grip of the respective handles and the number of modules that can be used within a predefined space to be maximized.

In the preferred embodiments of the present invention, said main body comprises, in at least a portion arranged peripherally with respect to said at least one housing receptacle, at least a portion of the body that is adapted to be illuminated, which is at least partially visible, to a user positioned in the front of said main body, when said main body is in said first mounting position and when said main body is in said second mounting position.

Such an alert, for example, allows the customer or operator to be notified of which specific terminal to take from amongst a plurality of available terminals, or of a fault condition within a housing receptacle (e.g. a fault within the locking/releasing system of the portable terminal within/from the housing receptacle) or of the non-usability of the portable terminal housed within the housing receptacle (for example, because an update is in progress to the software of the portable terminal housed within the housing receptacle or to the firmware provided within the housing receptacle), or of the incorrect operation of the system for charging the portable terminal and/or for exchanging data between the portable terminal and the housing receptacle, or of a request for maintenance, etc.

Portions of the body can be illuminated in different ways (for example with different colors, light intensity, intermittently) depending upon the type of alert to be provided to the customer or operator.

Preferably, said at least one portion of the body that is adapted to be illuminated comprises a first area that is adapted to be illuminated, arranged on one side with respect to said at least one housing receptacle and a second area that is adapted to be illuminated, arranged, with respect to said at least one housing receptacle, on the opposite side to that of said first area that is adapted to be illuminated.

This ensures that at least one of these aforesaid areas remains visible to the user in the case wherein, when a terminal is housed within its own housing receptacle, the other one of these aforesaid areas that are adapted to be illuminated is hidden by the terminal itself.

In particularly preferred forms of the present invention, when said main body is in said second mounting position, said first mounting wall has an orientation that is identical to that assumed by the second mounting wall when said main body is oriented in said first mounting position.

This makes it possible to assemble, within the same space, the same number of modules, regardless of the mounting position of each of them.

Preferably, the module of the invention comprises a bracket for mounting said main body upon said support wall.

Preferably, said bracket comprises a first bracket element designed to be securely mounted upon said support wall and a second bracket element designed to be securely mounted upon said main body, wherein said second bracket element can be oriented with respect to said first bracket element in a plurality of mounting positions.

In this way it is possible to orient the housing receptacles of a module in different ways with respect to those of a neighboring module depending upon the distance within which each module is mounted with respect to the position assumed by the customer who must take the portable terminal, thereby facilitating the taking-up of the terminals by users.

In a second aspect, the present invention relates to a modular assembly for housing optical terminals, comprising a plurality of modules of the type described above with regard to the first aspect of the invention.

Such a modular assembly presents the same advantages as those mentioned above with reference to the module of the present invention.

Preferably, at least some of said modules are arranged in succession along a direction orthogonal to said longitudinal direction and said support wall and/or side by side along said longitudinal direction.

All of the modules that make up the aforesaid assembly may or may not have the same number of housing receptacles.

All of the aforesaid modules can also be positioned identically (i.e. mounted on the support wall by means of the respective first mounting wall or the respective second mounting wall) or differently (i.e., some mounted on the support wall by means of the respective first mounting wall and others mounted on the support wall by means of the respective second mounting wall), in such a way as to implement a mixture of modular assemblies.

More features and benefits of the device of the present invention will become more evident from the following detailed description of one preferred embodiment thereof, by way of an illustrative and non limiting example with reference to the enclosed drawings. In said drawings:
- figure 1 is a perspective schematic view of a module for housing portable terminals, according to the present invention, in a first mounting position;
- figure 2 is a perspective schematic view of the module of figure 1 in a second mounting position;
- figure 3 is a sectional schematic view of the module of figure 1 in the mounting position of figure 1 and with a first type of terminal housed within said module;
- figure 4 is a sectional schematic view of the module of figure 1 in the mounting position of figure 2 and with a second type of terminal housed within said module;
- figure 5 is a prospective schematic view of a modular assembly according to the present invention comprising a plurality of modules of figure 1 in the mounting position of figure 1 and with some terminals of the aforesaid first type of terminal;
- figure 6 is a prospective schematic view of a modular assembly according to the present invention comprising a plurality of modules of figure 1 in the mounting position of figure 2 and with some terminals of the aforesaid second type of terminal;

In the attached figures, with the numeric reference 100, a module is indicated for housing portable terminals according to the present invention.

The module 100 is intended to be mounted on a vertical or horizontal support wall. In the example shown here, the module 100 is intended to be mounted on a vertical support wall, schematically indicated by the numerical reference 200.

The module 100 comprises a main body 101 within which three housing receptacles 110 for portable terminals are formed. Such housing receptacles 110 are facing each other along a longitudinal direction X of the main body 101.

Alternative embodiments of the module 100 may be envisaged (not shown) wherein the number of housing receptacles 101 is less than or greater than three.

The main body 101 comprises a pair of mounting walls 102 and 103 by means of which the module 100 is associated with the support wall 200.

The mounting walls 102 and 103 are inclined relative to one other by an angle ω that is preferably greater than, or equal to, 90°, more preferably comprised between approximately 90° and approximately 135°, including extremities. In the embodiment illustrated in the enclosed drawings, the angle ω is equal to 110°.

In the embodiment illustrated, the mounting walls 102 and 103 have a slightly different shape and surface extension, but alternative embodiments envisaged wherein the mounting walls 102 and 103 have the same shape and surface extension.

In the illustrated embodiment, the main body 101 has, in cross-section, a non-symmetrical shape with respect to a bisector of the angle ω, but alternative embodiments are envisaged wherein the main body 101 has, in cross-section, a symmetrical shape with respect to the bisector of the angle ω.

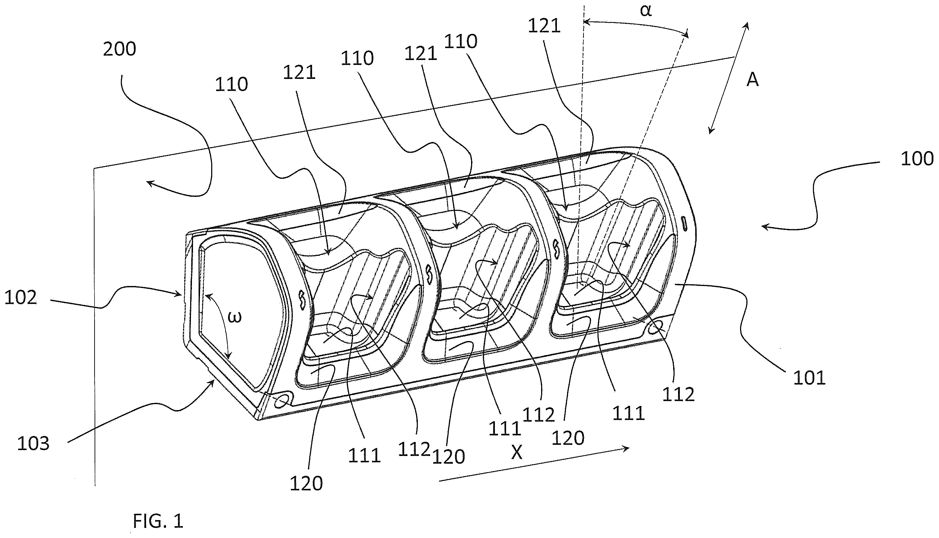

In figures 1, 3 and 5, the module 100 is mounted on the support wall 200 by means of the mounting wall 102, which in the example shown here is oriented such as to be substantially parallel to the support wall 200.

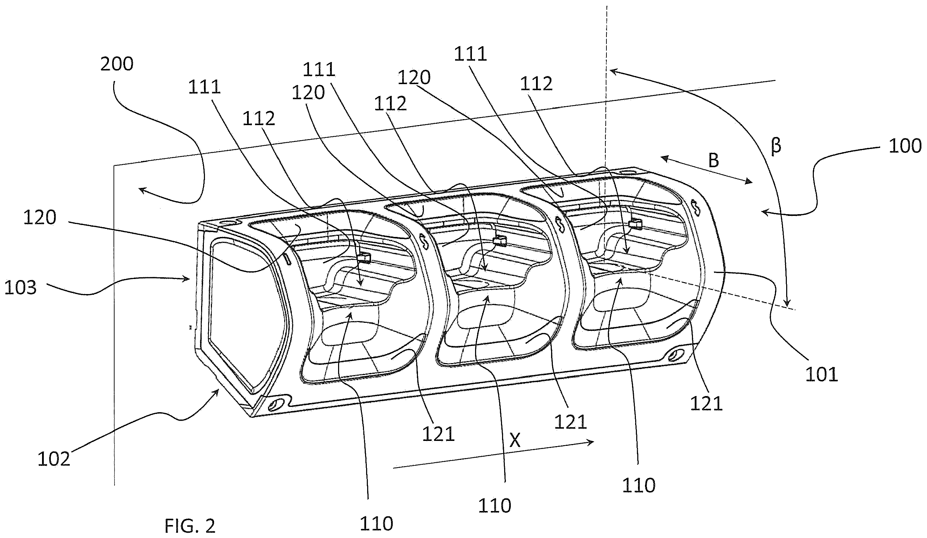

Conversely, in figures 2, 4 and 6, the module 100 is mounted on the support wall 200 by means of the mounting wall 103, which in the example shown here is oriented such as to be substantially parallel to the support wall 200.

Before being mounted on the support wall 200, the module 100 is then appropriately oriented such as to assume the position shown in figures 1, 3 and 5 or, alternately, the position shown in figures 2, 4 and 6.

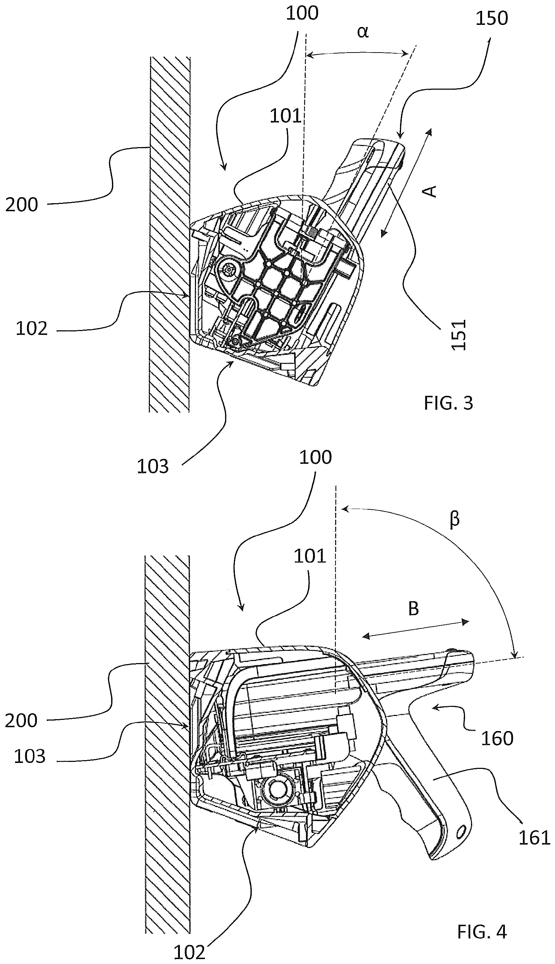

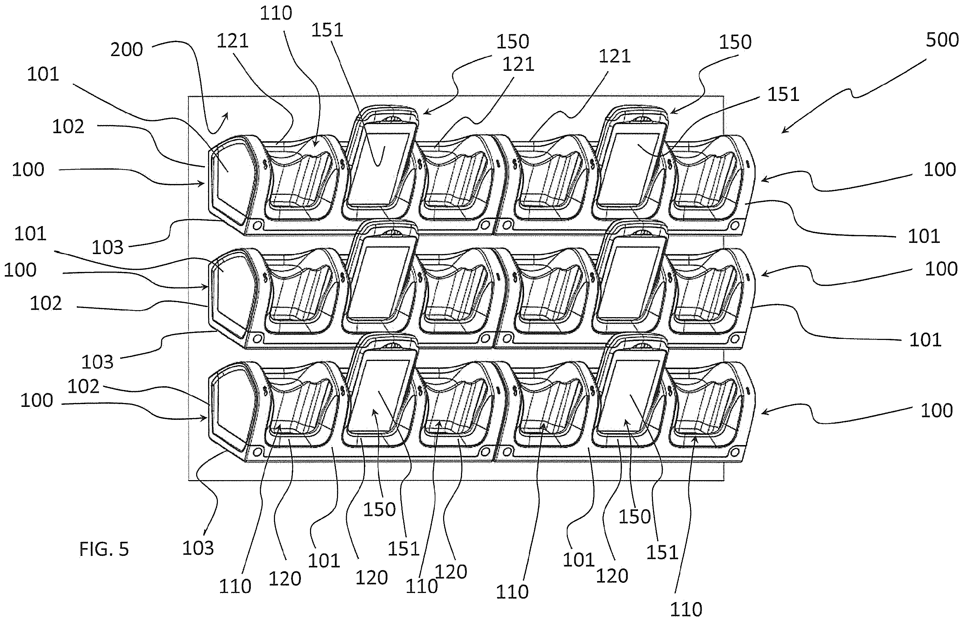

The position shown in figures 1, 3 and 5 is the optimal mounting position for housing portable Handheld terminals, such as for example those shown in figures 3 and 5 with the numerical reference 150. In particular, in such a position, the displays, typically provided on the front face 151 of the terminal 150, are oriented in the most suitable position in order to be clearly visible to users positioned in front of the support wall 200.

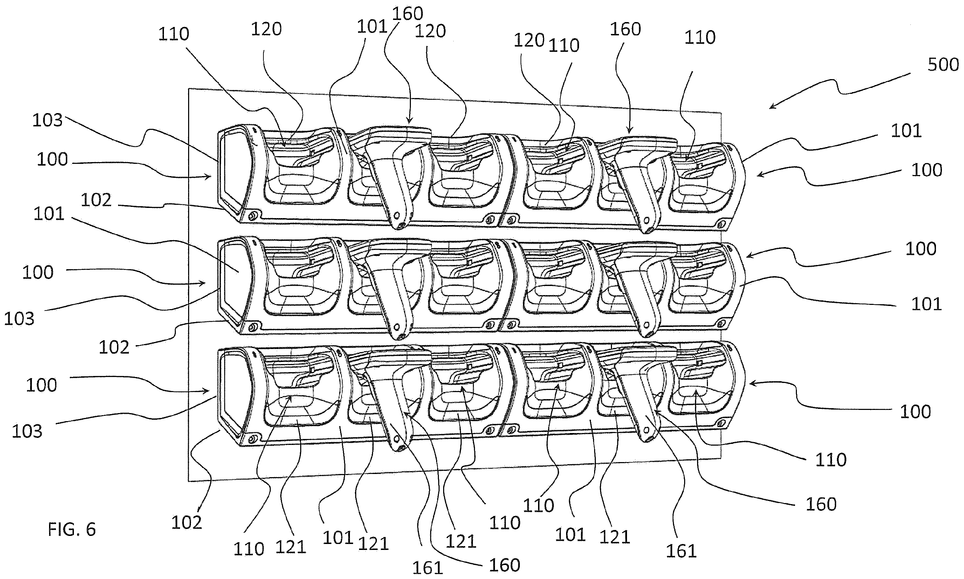

The position shown in figures 2, 4 and 6 is the optimal mounting position for housing portable Gun terminals, such as for example those shown in figures 4 and 6 with the numerical reference 160. In particular, in such a position, the handles 161 of the portable terminals 160 are oriented in the most suitable position to be taken by users positioned in front of the support wall 200.

Comparing figures 1, 3, 5 and figures 2, 4, 6 it can be seen, in particular, how the orientation of the mounting wall 102 when the main body 101 is oriented as in figures 2 and 4 is identical to that of the mounting wall 103 when the main body 101 is oriented as in figures 1 and 3.

In the embodiments (not shown) wherein the mounting walls 102 and 103 have the same shape and surface extension and wherein the main body 101 has, in cross-section, a symmetrical shape with respect to the bisector of the angle ω, the module 100 has the same shape when it is oriented as in figures 1, 3, 5 and when it is oriented as in figures 2, 4, 6.

Within each housing receptacle 110 there are locking members of the portable terminals 150, 160, not shown in the figures attached. Connectors for charging the terminals may also be provided (in the embodiment shown here these connectors are absent and recharging takes place via wireless technology). The exchange of information between portable terminals 150, 160 and respective housing receptacles preferably takes place by means of NFC technology.

Each housing receptacle 110 comprises a striking surface 111 designed to butt against a surface of the portable terminals 150, 160 when the latter are inserted into the housing receptacles 110.

Each housing receptacle 110 also comprises a lateral surface 112 that is designed to guide the insertion of the portable terminal 150, 160 into the housing receptacle 110 and to enclose at least partially the portable terminal 150, 160 once it has been inserted into the housing receptacle 110.

Within each housing receptacle 110 an insertion/extraction direction of the portable terminals 150, 160 can be therefore defined. Such a direction also defines the direction along which each housing receptacle 110 extends within the main body 101. Such a direction is indicated with the double arrow A in figures 1 and 3 and with the double arrow B in figures 2 and 4.

The insertion/extraction direction A is inclined, with respect to the first mounting wall 102, by an angle α preferably less than, or equal to, 45°, more preferably comprised between approximately 10° and approximately 40°, including extremities. In the embodiment illustrated in the enclosed drawings, the angle α is equal to 27.5°.

The insertion/extraction direction B is inclined, with respect to the first mounting wall 103, by an angle β preferably greater than, or equal to, 45°.

In particular, the angle α is preferably comprised between approximately 10° and approximately 40° and the angle β is preferably comprised between approximately 45° and approximately 85°. In the embodiment illustrated in the enclosed drawings, the angle α is approximately 27.5° and the angle β is approximately 82.5°.

With particular reference to figures 1 and 2, the main body 101 comprises, for each housing receptacle 110, a respective first portion of the body that can be illuminated 120 and a respective second portion of the body that can be illuminated 121. Such portions of the body that can be illuminated 120, 121 are defined at peripheral areas with respect to the housing receptacle 110, such areas being arranged on the opposite part with respect to the housing receptacle 110, such that at least one of the aforesaid portions of the body that can be illuminated 120, 121 is visible to a user positioned in front of the main body 101 when it is mounted on the support wall 200, both in the mounting position of figure 1 and the mounting position of figure 2, also when, within the respective housing receptacle, a respective terminal 150, 160 is housed.

The module 100 is mounted on the support wall 200, in both of the aforesaid mounting positions, by means of a bracket (not shown).

In an embodiment, not shown, such a bracket comprises a first bracket element that is designed to be securely mounted on the support wall 200 and a second bracket element that is designed to be securely mounted on the main body 101. The second bracket element can be oriented with respect to the first bracket element in a plurality of different mounting positions.

Figures 5 and 6 show a modular assembly 500 comprising six modules 100, three of which are arranged in succession along a direction y that is orthogonal to the longitudinal direction x (and parallel to the support wall 200) and the other three, side by side, along the longitudinal direction x. In figure 5 the modules 100 are mounted on the support wall 200 by means of the mounting wall 102, whilst in figure 6 the modules 100 are mounted on the support wall 200 by means of the mounting wall 103.

For clarity of illustration, in figures 5 and 6, only some of the numeric references are reported that are used in the description of the module 100 given above.

It is possible to define modular assemblies 500 including any number of modules 100 arranged in succession (or side by side) only along said direction y, only along the longitudinal direction x or along both of the aforesaid directions.

To pass from the mounting position shown in figures 1, 3, 5 to the mounting position shown in figures 2, 4, 6, the operator first performs a rotation of the module 100 by 180° with respect to an axis perpendicular to the support wall 200 and, successively, a rotation equal to an angle of 180-ω in order to position the mounting wall 103 in the position previously assumed by the mounting wall 102.

The description was given with reference to two specific types of portable terminals. It is the case, however, that the module 100 of the present invention allows for housing portable terminals of different types and shapes from those described above. The only prerequisite for such portable terminals is that the portion of the body that is designed to be housed within the housing receptacle 110 be identical for all of the portable terminals.

## Claims

1. Module (100) for housing portable terminals (150, 160), comprising a main body (101) extended along a longitudinal direction (x) and provided with at least one housing receptacle (110) for a portable terminal (150, 160), said main body (101) comprising:
- a first mounting wall (102) of said main body (101) adapted to be mounted on a support wall (200);
- a second mounting wall (103) of said main body (101) adapted to be mounted on said support wall (200), said second mounting wall (103) being inclined with respect to said first mounting wall (102) by a fixed angle (ω);
wherein said main body (101) is mountable on said support wall (200) in at least two different mounting positions, a first mounting position being defined when said main body (101) is oriented in order to be mounted on said support wall (200) by means of said first mounting wall (102) and a second mounting position being defined when said main body (101) is oriented in order to be mounted on said support wall (200) by means of said second mounting wall (103);
wherein, in said first mounting position said at least one housing receptacle (100) extends along a first insertion/extraction direction (A) of said portable terminal (150, 160) toward/from said at least one housing receptacle (110) and in said second mounting position said at least one housing receptacle (110) extends along a second insertion/extraction direction (B) of said portable terminal (150, 160) toward/from said at least one housing receptacle (100), said second insertion/extraction direction (B) being different from said first insertion/extraction direction (A).

2. Module (100) according to claim 1, wherein said main body (101) comprises three housing receptacles (110) for respective portable optical terminals (150, 160), said three housing receptacles (110) being placed side by side along said longitudinal direction (x).

3. Module (100) according to any one of the preceding claims, wherein said fixed angle is greater than, or equal to, 90°.

4. Module (100) according to any one of the preceding claims, wherein said first insertion/extraction direction (A) is inclined, with respect to said first mounting wall (102), by a first angle (α) less than, or equal to, 45°.

5. Module (100) according to any one of the preceding claims, wherein said at least one second insertion/extraction direction (B) is inclined, with respect to said second mounting wall (103), by a second angle (β) greater than, or equal to, 45°.

6. Module (100) according to any one of the preceding claims, wherein said main body (101) comprises, in at least one portion thereof, arranged peripherally with respect to said at least one housing receptacle (110), at least one body portion that is adapted to be illuminated (120, 121), that is at least partially visible, to a user positioned frontally with respect to said main body (101), when said main body (101) is in said first mounting position and when said main body (101) is in said second mounting position.

7. Module (100) according to claim 6, wherein said at least one portion of the body that is adapted to be illuminated comprises a first area that is adapted to be illuminated (120) arranged on one side with respect to said at least one housing receptacle (110) and a second area that is adapted to be illuminated (121) arranged, with respect to said at least one housing receptacle (110), on the opposite side to that of said first area that is adapted to be illuminated (120).

8. Module (100) according to any of the preceding claims, wherein when said module is in said second mounting position said first mounting wall (102) has an orientation that is identical to that assumed by said second mounting wall (103) when said main body (101) is oriented in said first mounting position.

9. Module (100) according to any one of the preceding claims, comprising a bracket for mounting said main body (101) on said support wall (200).

10. Module (100) according to claim 9, wherein said bracket comprises a first bracket element designed to be securely mounted on said support wall (200) and a second bracket element designed to be securely mounted on said main body (101), wherein said second bracket element is adapted to be oriented with respect to said first bracket element in a plurality of mounting positions.

11. Modular assembly (500) for housing optical terminals (150, 160), comprising a plurality of modules (100) according to any one of the preceding claims.

## Patentansprüche

1. Modul (100) zum Unterbringen tragbarer Endgeräte (150, 160), umfassend einen Hauptkörper (101), der sich entlang einer Längsrichtung (x) erstreckt und mit mindestens einer Gehäusesteckdose (110) für ein tragbares Endgerät (150, 160) versehen ist, wobei der Hauptkörper (101) umfasst:
- eine erste Montagewand (102) des Hauptkörpers (101), die zum Montieren an einer Stützwand (200) angepasst ist;
- eine zweite Montagewand (103) des Hauptkörpers (101), die zum Montieren an der Stützwand (200) angepasst ist, wobei die zweite Montagewand (103) in Bezug auf die erste Montagewand (102) in einem festen Winkel (ω) geneigt ist;
wobei der Hauptkörper (101) an der Stützwand (200) in mindestens zwei verschiedenen Montagepositionen montierbar ist, wobei eine erste Montageposition definiert ist, wenn der Hauptkörper (101) dazu ausgerichtet ist, mittels der ersten Montagewand (102) an der Stützwand (200) montiert zu werden, und eine zweite Montageposition definiert ist, wenn der Hauptkörper (101) dazu ausgerichtet ist, mittels der zweiten Montagewand (103) an der Stützwand (200) montiert zu werden;
wobei sich in der ersten Montageposition die mindestens eine Gehäusesteckdose (100) entlang einer ersten Einsteck-/Auszugsrichtung (A) des tragbaren Endgerätes (150, 160) zu/von der mindestens einen Gehäusesteckdose (110) erstreckt und in der zweiten Montageposition die mindestens eine Gehäusesteckdose (110) sich entlang einer zweiten Einsteck-/Auszugsrichtung (B) des tragbaren Endgerätes (150, 160) zu/von der mindestens einen Gehäusesteckdose (100) erstreckt, wobei die zweite Einsteck-/Auszugsrichtung (B) von der ersten Einsteck-/Auszugsrichtung (A) verschieden ist.

2. Modul (100) nach Anspruch 1, wobei der Hauptkörper (101) drei Gehäusesteckdosen (110) für jeweilige tragbare optische Endgeräte (150, 160) umfasst, wobei die drei Gehäusesteckdosen (110) entlang der Längsrichtung (x) nebeneinander angeordnet sind.

3. Modul (100) nach einem der vorstehenden Ansprüche, wobei der feste Winkel größer als oder gleich 90° ist.

4. Modul (100) nach einem der vorstehenden Ansprüche, wobei die erste Einsteck-/Auszugsrichtung (A) in Bezug auf die erste Montagewand (102) in einem ersten Winkel (α) von weniger als oder gleich 45° geneigt ist.

5. Modul (100) nach einem der vorstehenden Ansprüche, wobei die mindestens eine zweite Einsteck-/Auszugsrichtung (B) in Bezug auf die zweite Montagewand (103) in einem zweiten Winkel (β) größer als oder gleich 45° geneigt ist.

6. Modul (100) nach einem der vorstehenden Ansprüche, wobei der Hauptkörper (101) in mindestens einem Abschnitt davon, der am Umfang in Bezug auf die mindestens eine Gehäusesteckdose (110) angeordnet ist, mindestens einen Körperabschnitt umfasst, der dazu angepasst ist, beleuchtet (120, 121) zu werden, der für einen Benutzer, der sich in Bezug auf den Hauptkörper (101) frontal davor befindet, zumindest teilweise sichtbar ist, wenn sich der Hauptkörper (101) in der ersten Montageposition befindet und wenn sich der Hauptkörper (101) in der zweiten Montageposition befindet.

7. Modul (100) nach Anspruch 6, wobei der mindestens eine Abschnitt des Körpers, der dazu angepasst ist, beleuchtet zu werden, einen ersten Bereich umfasst, dazu angepasst ist, beleuchtet zu werden (120), der auf einer Seite in Bezug auf die mindestens eine Gehäusesteckdose (110) angeordnet ist, und einen zweiten Bereich, der dazu angepasst ist, beleuchtet zu werden (121), der in Bezug auf die mindestens eine Gehäusesteckdose (110) auf der gegenüberliegenden Seite des ersten Bereichs, der dazu angepasst ist, beleuchtet zu werden (120), angeordnet ist.

8. Modul (100) nach einem der vorstehenden Ansprüche, wobei, wenn sich das Modul in der zweiten Montageposition befindet, die erste Montagewand (102) eine Ausrichtung aufweist, die identisch mit der ist, die von der zweiten Montagewand (103) angenommen wird, wenn der Hauptkörper (101) in der ersten Montageposition ausgerichtet ist.

9. Modul (100) nach einem der vorstehenden Ansprüche, das eine Halterung zum Befestigen des Hauptkörpers (101) an der Stützwand (200) umfasst.

10. Modul (100) nach Anspruch 9, wobei die Halterung ein erstes Halterungselement umfasst, das so gestaltet ist, dass es sicher an der Stützwand (200) montiert werden kann, und ein zweites Halterungselement, das so gestaltet ist, dass es sicher an dem Hauptkörper (101) montiert werden kann, wobei das zweite Halterungselement dazu angepasst ist, in Bezug auf das erste Halterungselement in einer Vielzahl von Befestigungspositionen ausgerichtet zu werden.

11. Modulare Anordnung (500) zum Unterbringen von optischen Endgeräten (150, 160), die eine Vielzahl von Modulen (100) nach einem der vorstehenden Ansprüche umfasst.

## Revendications

1. Module (100) destiné à loger des terminaux portables (150, 160), comprenant un corps principal (101) en extension le long d'une direction longitudinale (x) et pourvu d'au moins un réceptacle de logement (110) pour un terminal portable (150, 160), ledit corps principal (101) comprenant :
- une première paroi de montage (102) dudit corps principal (101), conçue pour être montée sur une paroi de support (200) ;
- une deuxième paroi de montage (103) dudit corps principal (101), conçue pour être montée sur ladite paroi de support (200), ladite deuxième paroi de montage (103) étant inclinée par rapport à ladite première paroi de montage (102) selon un angle fixe (ω) ;
dans lequel ledit corps principal (101) peut être monté sur ladite paroi de support (200) dans au moins deux positions de montage différentes, une première position de montage étant définie lorsque ledit corps principal (101) est orienté afin d'être monté sur ladite paroi de support (200) au moyen de ladite première paroi de montage (102) et une deuxième position de montage étant définie lorsque ledit corps principal (101) est orienté afin d'être monté sur ladite paroi de support (200) au moyen de ladite deuxième paroi de montage (103) ;
dans lequel, dans ladite première position de montage ledit au moins un réceptacle de logement (100) s'étend le long d'une première direction d'insertion/extraction (A) dudit terminal portable (150, 160) en direction/à partir dudit au moins un réceptacle de logement (110) et dans ladite deuxième position de montage ledit au moins un réceptacle de logement (110) s'étend le long d'une deuxième direction d'insertion/extraction (B) dudit terminal portable (150, 160) en direction/à partir dudit au moins un réceptacle de logement (100), ladite deuxième direction d'insertion/extraction (B) étant différente de ladite première direction d'insertion/extraction (A).

2. Module (100) selon la revendication 1, dans lequel ledit corps principal (101) comprend trois réceptacles de logement (110) pour des terminaux optiques portables respectifs (150, 160), lesdits trois réceptacles de logement (110) étant placés côte à côte le long de ladite direction longitudinale (x).

3. Module (100) selon l'une quelconque des revendications précédentes, dans lequel ledit angle fixe est supérieur, ou égal, à 90°.

4. Module (100) selon l'une quelconque des revendications précédentes, dans lequel ladite première direction d'insertion/extraction (A) est inclinée, par rapport à ladite première paroi de montage (102), selon un premier angle (α) inférieur, ou égal, à 45°.

5. Module (100) selon l'une quelconque des revendications précédentes, dans lequel ladite au moins une deuxième direction d'insertion/extraction (B) est inclinée, par rapport à ladite deuxième paroi de montage (103), selon un deuxième angle (β) supérieur, ou égal, à 45°.

6. Module (100) selon l'une quelconque des revendications précédentes, dans lequel ledit corps principal (101) comprend, dans au moins une partie de celui-ci, agencée de façon périphérique par rapport audit au moins un réceptacle de logement (110), au moins une partie de corps qui est conçue pour être éclairée (120, 121), qui est au moins partiellement visible, pour un utilisateur positionné de manière frontale par rapport audit corps principal (101), lorsque ledit corps principal (101) est dans ladite première position de montage et lorsque ledit corps principal (101) est dans ladite deuxième position de montage.

7. Module (100) selon la revendication 6, dans lequel ladite au moins une partie du corps qui est conçue pour être éclairée comprend une première zone qui est conçue pour être éclairée (120) agencée sur un côté par rapport audit au moins un réceptacle de logement (110) et une deuxième zone qui est conçue pour être éclairée (121) agencée, par rapport audit au moins un réceptacle de logement (110), sur le côté opposé à celui de ladite première zone qui est conçue pour être éclairée (120).

8. Module (100) selon l'une quelconque des revendications précédentes, dans lequel lorsque ledit module est dans ladite deuxième position de montage ladite première paroi de montage (102) a une orientation qui est identique à celle prise par ladite deuxième paroi de montage (103) lorsque ledit corps principal (101) est orienté dans ladite première position de montage.

9. Module (100) selon l'une quelconque des revendications précédentes, comprenant un support pour le montage dudit corps principal (101) sur ladite paroi de support (200).

10. Module (100) selon la revendication 9, dans lequel ledit support comprend un premier élément de support conçu pour être solidement monté sur ladite paroi de support (200) et un deuxième élément de support conçu pour être solidement monté sur ledit corps principal (101), dans lequel ledit deuxième élément de support est conçu pour être orienté par rapport audit premier élément de support dans une pluralité de positions de montage.

11. Ensemble modulaire (500) destiné à loger des terminaux optiques (150, 160), comprenant une pluralité de modules (100) selon l'une quelconque des revendications précédentes.
